# DEMANDE DE BREVET EUROPEEN

(11) **EP 2 640 007 A1**
(43) Date de publication de la demande: **18.09.2013**
(21) Numéro de dépôt: 13158567.1
(22) Date de dépôt: 11.03.2013
(51) Int. Cl.: H04L 12/28, H04L 12/46, G06F 13/10

(54) **Dispositif électronique configuré pour être relié à un réseau local et passerelle d'accès à un réseau local**

(30) Priorité: 13.03.2012 FR 1252228
(71) Demandeur: France Télécom, 75015 Paris (FR)
(72) Inventeur: Seureau, Cédric, 22300 Lannion (FR); Lacharme, Sandrine, 22300 Lannion (FR)
(74) Mandataire: Lefevre-Groboillot, David André

(57) **Abrégé**

L'invention porte sur un dispositif électronique (140) comprenant des moyens (146) pour, quand il est relié à un réseau local de communication utilisant un premier protocole de communication, identifier dans ledit réseau un dispositif tiers (130 ; 150) indiquant être apte à communiquer selon un deuxième protocole de communication différent du premier protocole, **caractérisé en ce qu'**il comprend également des moyens (142) pour établir avec le dispositif tiers (130 ; 150) un canal de communication (220 ; 221) conforme au premier protocole pour faire transiter des paquets de données conformes audit premier protocole encapsulant (225) des paquets de données conformes au deuxième protocole.

## Description

### Domaine technique et art antérieur

L'invention s'inscrit dans le domaine des dispositifs électroniques aptes à communiquer avec d'autres dispositifs électroniques par un protocole de communication via un réseau local de communication. On rappelle qu'un réseau local est défini par un ensemble de noeuds (ou terminaux, par exemple des micro-ordinateurs) communiquant sans routeur intermédiaire. Des exemples de réseaux locaux sont le réseau Ethernet, l'Ethernet commuté ou encore le Token ring, ainsi que les réseaux locaux Wi-fi.

De tels réseaux locaux peuvent être en particulier basés sur le protocole de communication Internet (protocole « IP »), mais d'autres protocoles sont envisageables, comme par exemple le protocole Appletalk (marque déposée). Ces protocoles, outre qu'ils organisent l'échange de données, permettent aussi la détermination pour chaque terminal d'une adresse réseau unique dont le format et le mécanisme d'attribution sont définis par le protocole.

Les terminaux d'un réseau local peuvent aussi communiquer avec des équipements ne constituant pas un noeud du réseau local par des protocoles de communication différents de celui attribuant ainsi des adresses et n'étendant pas la fonction de détermination d'adresse du réseau.

Ainsi, d'autres protocoles, comme le protocole Bluetooth (marque déposée) ou le protocole Zigbee (marque déposée) permettent une communication sans fil, à courte distance, et de préférence à faible consommation avec divers équipements électroniques. Et le protocole USB est utilisé pour connecter d'autres équipements avec un démarrage immédiat. Les équipements ainsi reliés ne bénéficient pas d'une adresse IP.

Diverses technologies et protocoles cohabitent donc, y compris dans un espace restreint comme une habitation ou un local d'entreprise dans lequel est installé un réseau local.

Or tous les dispositifs électroniques du réseau local ne disposent pas de l'interface matérielle pour communiquer par un autre protocole que celui attribuant les adresses aux dispositifs du réseau local.

Ainsi, en ce qui concerne les protocoles de communication sans fil évoqués plus haut (Bluetooth et Zigbee), si dans une habitation, un réseau local IP comprend un micro-ordinateur et une tablette, et qu'une caméra à connectivité Bluetooth est disponible, il est courant que seul le micro-ordinateur soit en mesure de communiquer avec la caméra, car il est équipé d'un émetteur/récepteur Bluetooth, ce qui peut ne pas être le cas de la tablette. Un utilisateur de la tablette (ou une application exécutée sur celle-ci) ne peut alors pas prendre le contrôle de la caméra, ni visionner une vidéo capturée par cette caméra. Un exemple similaire peut être donné pour un équipement domotique communiquant en Zigbee : seule la centrale domotique de commande est en mesure de communiquer avec lui, alors même que cette centrale est connectée au réseau local.

Une solution à ce problème est d'équiper chaque terminal du réseau d'une clé matérielle (« *dongle* »), insérée dans un port de communication (par exemple un port parallèle, ou un port série), et comprenant une interface matérielle de communication avec l'équipement visé, utilisant le protocole de communication spécifique à cet équipement. Une telle solution a un coût, implique la démarche d'effectuer l'acquisition d'un matériel supplémentaire, et augmente l'encombrement des dispositifs électroniques équipés d'une telle clé. Ces inconvénients constituent rapidement un problème, notamment dès que plus d'un équipement est concerné.

Qui plus est on voit aussi qu'une telle stratégie ne s'applique pas aux équipements connectés par câble USB et utilisant le protocole de communication éponyme, car il n'y a alors qu'un seul câble, que sa longueur est limitée et que le nombre de connecteurs USB d'un terminal du réseau est limité.

Une autre solution est de procéder à une traduction des messages émis conformément à un protocole de communication spécifique à un équipement vers un autre protocole de communication compris par le dispositif électronique destinataire. Cette traduction peut être faite par un dispositif électronique capable de communiquer par chacun des deux protocoles. Elle nécessite que le dispositif souhaitant utiliser l'équipement comprenne des moyens pour identifier dans le réseau local un dispositif capable de communiquer par le deuxième protocole, et que ce dernier dispositif comprenne des moyens pour indiquer dans le réseau local qu'il est apte à communiquer conformément au deuxième protocole.

C'est ainsi qu'est organisé, sous certains systèmes d'exploitation, le partage d'imprimantes reliées par un câble USB à un micro-ordinateur dans un réseau local. La traduction du protocole USB au protocole IP est alors effectuée par le micro-ordinateur auquel est reliée l'imprimante.

Alternativement, dans un réseau local, un dispositif particulier, telle une passerelle d'accès, peut effectuer la traduction, s'il dispose de l'interface matérielle adaptée pour communiquer dans le deuxième protocole.

Néanmoins, cette solution mobilise de la puissance de calcul du processeur du dispositif effectuant la traduction. Il faut aussi qu'une application de traduction spécifique ait été conçue puis installée, ce qui est une contrainte supplémentaire.

Par ailleurs, dans le domaine des passerelles, on sait que certaines passerelles d'accès à un réseau local (incorporant un routeur et un commutateur), notamment des modems ADSL, sont capables d'interroger les dispositifs du réseau local pour connaître les équipements dont ils disposent et la connectivité associée. Les dispositifs électroniques du réseau ayant été configurés pour interagir avec la passerelle répondent. De tels dispositifs dévoilent ainsi qu'ils communiquent avec tel ou tel équipement. Ainsi, pour un protocole donné, la passerelle comprend des moyens pour établir une liste des dispositifs du réseau aptes à communiquer par le protocole. Cette liste est couramment construite en utilisant une fonction de découverte.

Cette fonctionnalité a été utilisée jusqu'à maintenant pour fournir des informations au fournisseur d'accès. Elle n'a par contre pas été utilisée pour fournir des informations aux divers dispositifs électroniques du réseau local.

La présente invention vise, entre autres, à résoudre les difficultés ainsi évoquées, et, un de ses buts, en particulier, est de permettre un accès facile et transparent pour l'utilisateur à tous les équipements disponibles dans le réseau local, quel que soit le protocole de communication qu'ils utilisent.

### Résumé de l'invention

Ainsi, il est présenté un dispositif électronique comprenant des moyens pour, quand il est relié à un réseau local de communication utilisant un premier protocole de communication, identifier dans ledit réseau un dispositif tiers apte à communiquer selon un deuxième protocole de communication différent du premier protocole, **caractérisé en ce qu'il** comprend également des moyens pour établir avec le dispositif tiers un canal de communication conforme au premier protocole pour faire transiter des paquets de données conformes audit premier protocole, encapsulant des paquets de données conformes au deuxième protocole.

Grâce à ce dispositif, il n'est notamment pas besoin de faire procéder à une traduction d'un protocole vers un autre par le dispositif tiers apte à communiquer selon le deuxième protocole. On diminue donc la quantité de calcul à effectuer par celui-ci. Il n'est pas besoin non plus d'installer un *dongle* sur le dispositif électronique conforme à l'invention. Cela est possible grâce aux moyens pour établir un canal pour faire transiter des paquets de données conformes audit premier protocole, encapsulant des paquets de données conformes au deuxième protocole.

Le dispositif passerelle tiers étant un équipment toujours en fonctionnement, il permet d'apporter une disponibilité permanente du ce service de transmission de commandes.

En outre, l'emplacement de ce service sur un dispositif passerelle tiers limite le nombre de dispositif électronique à configurer avec un module de desencapsulation des commandes à destination d'un équipement utilisant le deuxième protocole de communication.

La passerelle ainsi dotée prolonge sont role en constituant un « hub » entre deux protolocoles de communications, tels que IP/Bluetooth, IP/Wifi, Bluetooth/Wifi, etc.

Le dispositif peut aussi comprendre des moyens pour exploiter, en utilisant lesdits paquets de données conformes au deuxième protocole, un équipement particulier, par exemple une caméra, une imprimante ou un équipement de domotique. Ainsi il n'est pas besoin d'effectuer, à aucun stade, une traduction d'un protocole à un autre, puisque les moyens pour exploiter l'équipement particulier sont alimentés par les paquets de données conformes au deuxième protocole, et/ou génèrent ces paquets.

Le dispositif selon l'invention, dans ce cas, extrait les paquets de données conformes au second protocole et les rend disponibles pour l'exploitation de la caméra, de l'imprimante ou de l'équipement de domotique, et/ou encapsule, dans des paquets conformes au premier protocole, les paquets conformes au second protocole générés par les moyens pour exploiter l'équipement.

Selon un mode de réalisation intéressant, les moyens pour identifier un dispositif tiers comprennent des moyens pour émettre une requête à destination d'une passerelle d'accès de réseau local.

Le dispositif électronique peut notamment comprendre ou constituer une tablette tactile, fonctionnant par exemple avec un système d'exploitation Android (marque déposée).

L'invention porte aussi sur un dispositif électronique comprenant des moyens pour être relié à un réseau local de communication utilisant un premier protocole de communication, une interface matérielle pour communiquer conformément à un deuxième protocole de communication différent du premier protocole, et des moyens pour indiquer par le réseau local qu'il est apte à communiquer par le deuxième protocole, **caractérisé en ce qu'il** comprend de plus des moyens pour établir, avec un dispositif tiers dans le réseau local, un canal de communication conforme au premier protocole, procéder à une extraction, ou respectivement, une encapsulation de paquets conformes au deuxième protocole hors, ou respectivement dans, des paquets de données conformes au premier protocole.

Ce dispositif, peut faire bénéficier des dispositifs tiers de son aptitude à communiquer selon le deuxième protocole, sans pour autant avoir à effectuer une traduction d'un protocole à l'autre. Cela est dû à la présence, au sein d'un même terminal, des moyens d'extraction et/ou d'encapsulation, et de l'interface matérielle pour communiquer selon le deuxième protocole de communication.

Selon un mode de réalisation intéressant, les moyens pour indiquer que le dispositif électronique est apte à communiquer par un deuxième protocole de communication sont configurés pour être mis en oeuvre dans le cadre d'un mécanisme de découverte.

Le dispositif électronique peut notamment comprendre ou constituer une centrale domotique ou un micro-ordinateur.

Le premier protocole peut en particulier être le protocole IP, le canal étant un tunnel IP. Le deuxième protocole peut notamment être un protocole Bluetooth, Zigbee ou USB. Un tunnel IP permet à la communication d'être sécurisée, les données transitant par le tunnel étant invisibles des noeuds du réseau local (par exemple la passerelle) par lesquels elles transitent.

L'invention porte aussi sur une passerelle d'accès depuis un réseau étendu à un réseau local de communication utilisant un premier protocole de communication, comprenant des moyens pour établir une liste des dispositifs électroniques du réseau local aptes à communiquer par un deuxième protocole de communication différent du premier protocole, **caractérisée en ce qu'**elle comprend des moyens pour transmettre à un dispositif tiers du réseau local ladite liste.

Cette passerelle est avantageuse, car elle permet aux terminaux du réseau local d'identifier les terminaux aptes à communiquer par un protocole donné.

Dans un mode de réalisation intéressant, les moyens pour transmettre ladite liste sont activés en réponse à une requête du dispositif tiers portant sur ledit deuxième protocole. Avantageusement, les moyens pour établir la liste mettent en oeuvre un mécanisme de découverte.

L'invention porte aussi sur un procédé de communication, comprenant une étape au cours de laquelle un dispositif électronique relié à un réseau local de communication utilisant un premier protocole de communication, identifie dans ledit réseau un dispositif tiers indiquant être apte à communiquer selon un deuxième protocole différent du premier protocole, **caractérisé en ce que** le procédé comprend de plus une étape d'établissement avec le dispositif tiers d'un canal de communication conforme au premier protocole pour le transit de paquets de données conformes audit premier protocole, lesdits paquets de données encapsulant des paquets de données conformes au deuxième protocole.

L'invention porte aussi sur un procédé de communication, comprenant une étape au cours de laquelle un dispositif électronique indique par un réseau local et par un premier protocole de communication, qu'il dispose d'une interface matérielle pour communiquer conformément à un deuxième protocole de communication différent du premier protocole, **caractérisé en ce que** le procédé comprend de plus des étapes d'établissement, avec un dispositif tiers dans le réseau local d'un canal de communication conforme au premier protocole, d'extraction ou respectivement d'encapsulation de paquets conformes au deuxième protocole hors, ou respectivement dans, des paquets de données conformes au premier protocole.

L'invention porte aussi sur un programme d'ordinateur apte à, quand il est exécuté par un dispositif électronique, mettre en oeuvre les étapes d'un des procédés évoqués plus haut, et sur un support d'enregistrement sur lequel est stocké un tel programme d'ordinateur.

### Brève description des figures

La présentation de l'invention va se poursuivre en relation avec les figures annexées.
La figure 1 présente un environnement informatique dans lequel l'invention peut trouver application.
La figure 2 présente un scénario de mise en oeuvre d'un mode de réalisation de l'invention.

### Exposé détaillé de l'invention

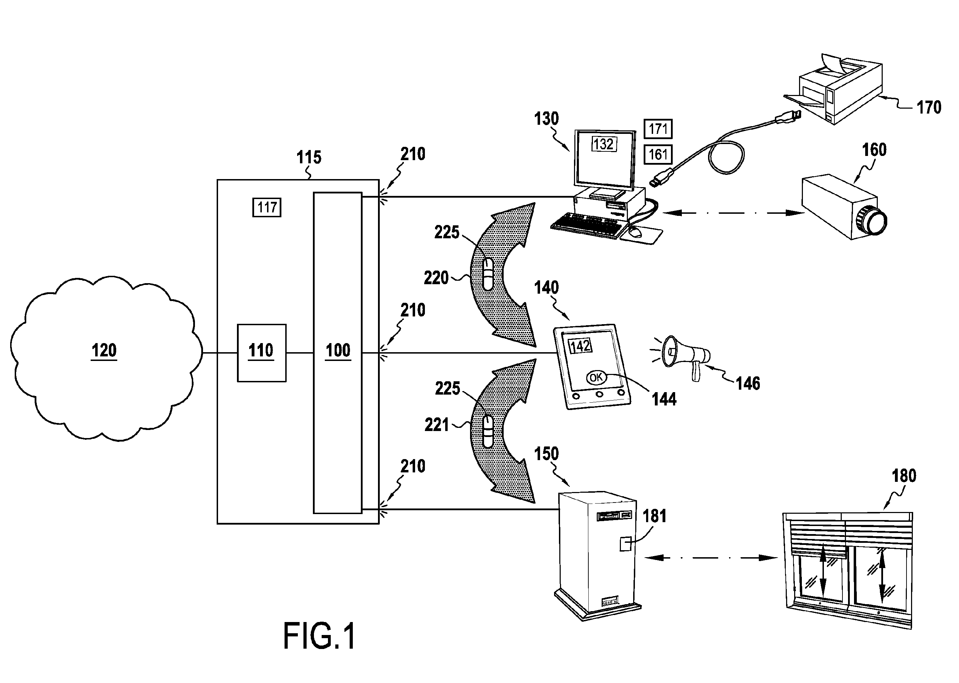

En **figure 1****,** on a représenté différents dispositifs électroniques pouvant être utilisés dans un réseau local d'habitation. Il s'agit ici d'un réseau local IP, géré par un commutateur 100, et disposant d'un routeur 110 qui le relie au réseau Internet 120. Le commutateur 100 et le routeur 110 sont couramment rassemblés dans une boîte constituant une passerelle 115.

Un micro-ordinateur 130, une tablette tactile 140 et une centrale domotique 150 sont reliés chacun à la passerelle 115, soit par une connexion filaire (dans le cas du micro-ordinateur 130 s'il est relié par un câble Ethernet), soit par une liaison sans fil comme une liaison Wi-fi (notamment dans le cas de la tablette 140). La communication se fait par le protocole IP, les paquets IP étant encapsulés dans des trames Ethernet ou Wi-fi.

Une caméra 160 communique par le protocole de communication Bluetooth avec le micro-ordinateur 130, qui dispose de l'interface matérielle 161 Bluetooth (un émetteur-récepteur 161 adapté à la norme) et du pilote d'interface associé. L'interface matérielle 161 reçoit les paquets de données Bluetooth et les émet sur un bus de données du micro-ordinateur, sur lequel est exécuté un programme qui exploite ces paquets de données pour afficher ou mémoriser les images de la caméra. Inversement, le programme émet des paquets de données conformes au protocole Bluetooth sur un bus de données qui les amène à l'interface matérielle 161 Bluetooth qui les émet en direction de la caméra.

Par contre, la tablette tactile 140 ne dispose pas d'interface matérielle lui permettant de communiquer en mode Bluetooth.

Une imprimante 170 est de plus reliée par un câble USB au micro-ordinateur 130. Elle communique avec celui-ci par le protocole de communication USB, le micro-ordinateur disposant d'une interface matérielle 171 USB (un connecteur 171 adapté à la norme) et du pilote associé. L'interface matérielle 171 reçoit les paquets de données USB et les émet sur un bus de données du micro-ordinateur 130, sur lequel est exécuté un programme qui exploite ces paquets de données. Inversement, le programme émet des paquets de données conformes au protocole USB sur un bus de données qui les amène à l'interface matérielle 171 USB qui les émet en direction de l'imprimante 170.

Enfin, la centrale domotique 150 commande des volets roulants 180 ou tout autre dispositif applicatif d'habitation (chauffage, lumière, cuisine...), par le protocole de communication Zigbee. A nouveau, la centrale 150 dispose d'une interface matérielle 181 Zigbee (un émetteur-récepteur 181 adapté à la norme) et du pilote associé. L'interface matérielle 181 reçoit les paquets de données Zigbee et les émet sur un bus de données de la centrale 150. Un programme exécuté sur un processeur de la centrale 150 exploite ces paquets de données. Inversement, le programme émet des paquets de données conformes au protocole Zigbee sur un bus de données qui les amène à l'interface matérielle 181 Zigbee qui les émet en direction du système de volets roulants 180.

La passerelle 115 possède une fonction de découverte 210 qui lui permet d'obtenir et enregistrer la liste des terminaux reliés au réseau local et la liste des équipements connus par ces terminaux. La fonction de découverte obtient et enregistre également le protocole de communication avec lequel chaque équipement communique, et la capacité qu'a ou non chaque terminal à communiquer par ce protocole. Ces listes sont par exemple mises à jour régulièrement. Dans une variante, la passerelle 115 obtient et mémorise uniquement la liste des interfaces matérielles dont disposent les terminaux du réseau local, ou la liste des protocoles par lesquels chaque terminal du réseau local indique être apte à communiquer.

Cette fonction de découverte 210 est réalisée par un programme exécuté par la passerelle 115, auquel répondent des programmes enregistrés sur chacun des terminaux du réseau local. Ces terminaux ont été préalablement configurés pour utiliser la passerelle comme passerelle d'accès au réseau étendu et comme commutateur pour le réseau local, et c'est à moment, par exemple, que des programmes répondant à la fonction de découverte de la passerelle ont été installés. Chacun de ces programmes répond à la fonction de découverte en indiquant que le dispositif sur lequel il est exécuté est apte à communiquer selon un protocole donné.

Dans le mode de réalisation de l'invention présenté, la tablette tactile 140 dispose d'un programme d'émission de requête 146, qui lui permet d'émettre à l'attention de la passerelle 115 une demande d'indication d'un terminal du réseau local disposant d'une interface matérielle Bluetooth. Ce programme d'émission de requête 146 a été préalablement téléchargé, par exemple sur un serveur du fournisseur d'accès au réseau. Il envoie sa requête spécifiquement à la passerelle d'accès au réseau local. Il peut constituer un programme unique avec le pilote 142.

La passerelle 115 est configurée pour répondre à une telle requête en fonction des informations mémorisées à l'aide de sa fonction de découverte 210. Cette configuration a été effectuée, par exemple, par une interface de programmation API de la passerelle 115, ou par l'installation d'un programme spécifique 117. La passerelle répond en transmettant une liste de terminaux du réseau local disposant d'une interface matérielle Bluetooth.

La tablette tactile 140 dispose quant à elle d'un programme constituant un pilote 142, lui permettant de mettre en place un canal de communication, ici précisément un tunnel IP 220, avec un autre terminal du réseau local.

Ce terminal est choisi dans la liste qui a été précédemment transmise par la passerelle 115. Il peut s'agir par exemple le micro-ordinateur 130. Le choix dans la liste peut être fait, selon les circonstances ou les choix d'implémentation, par un utilisateur, une application ou le pilote 142.

Le pilote 142 permet ensuite à la tablette 115 de recevoir par le tunnel 220 des paquets de données conformes au protocole IP, d'extraire des paquets de données conformes au protocole Bluetooth hors de paquets de données conformes au protocole IP, et à l'inverse d'encapsuler des paquets de données conformes au protocole Bluetooth dans des paquets de données conformes au protocole IP et de les émettre dans le tunnel IP 220. Les paquets de données encapsulés sont représentés en référence 225. Grâce au pilote 142, les paquets de données encapsulés 225 transitent dans le tunnel 220.

Plus précisément, ce pilote 142 émet les paquets de données conformes au protocole Bluetooth, un fois extraits, sur un bus de données de la tablette tactile 140 qui les amène à un micro-processeur, sur lequel est exécuté un programme d'application 144 qui exploite ces paquets de données.

Le programme d'application 144 permet par exemple à l'utilisateur de la tablette tactile 140 (ou à une application exécutée par celle-ci) d'exploiter la caméra 160. C'est lui qui émet, sur le bus de données, les paquets de données conformes au protocole Bluetooth que le pilote 142 encapsule et émet dans le tunnel IP 220.

Le programme d'application 144 peut être développé à l'aide d'un kit de développement de logiciel (SDK pour « *Software Development Kit*») adapté au système d'exploitation de la tablette 140, qui peut être par exemple un système Android. Le kit de développement de logiciel peut comprendre le pilote 142.

On remarquera que, dans une variante, le programme d'émission de requête 146 peut constituer un programme unique avec le pilote 142.

Le micro-ordinateur 130 dispose quant à lui d'un programme qualifié de client 132, permettant l'enregistrement de terminaux du réseau local souhaitant bénéficier de son interface matérielle Bluetooth, comme par exemple la tablette tactile 140, la création d'un tunnel IP 220 entre le micro-ordinateur 130 et un tel équipement, l'encapsulation de paquets de données conformes au protocole Bluetooth dans des paquets de données conformes au protocole IP et leur émission dans le tunnel IP 220, ainsi la réception par ce tunnel de paquets de données conformes au protocole IP, et l'extraction hors de ces paquets de données conformes au protocole Bluetooth. Ainsi, grâce au client 132, des paquets de données encapsulés 225 transitent dans le tunnel 220.

Plus précisément, le client 132 encapsule les paquets de données reçus de la caméra 160, et, en sens inverse, transmet à cette caméra 160 les paquets de données reçus, une fois ceux-ci extraits. La caméra exploite ces paquets suivant son fonctionnement normal.

Dans certaines situations ou implémentations, on comprend que les paquets de données encapsulés pourraient ne circuler dans le tunnel IP que dans un seul sens, soit parce qu'aucune information ne circule en sens inverse, soit que parce que la circulation en sens inverse se fait par un autre canal.

Dans d'autres modes de réalisation de l'invention, c'est l'imprimante 170 qui est exploitée par la tablette tactile 140 avec la création du tunnel IP 220, ou ce sont les volets roulants 180 qui sont commandés par la tablette 140, avec création d'un tunnel IP 221 entre la centrale 150 et la tablette 140. La centrale domotique peut aussi exploiter la caméra 160 ou l'imprimante 170 avec création d'un tunnel IP (non représenté) entre la centrale 150 et le micro-ordinateur 130.

Dans le cas de l'exploitation de l'imprimante 170, les paquets encapsulés 225 sont des paquets conformes au protocole USB. Dans le cas de l'exploitation des volets roulants 180, les paquets encapsulés 225 sont des paquets conformes au protocole Zigbee. Le programme d'émission de requête 146 émet une requête demandant l'indication d'un terminal du réseau local disposant d'une interface matérielle USB ou Zigbee, selon le cas.

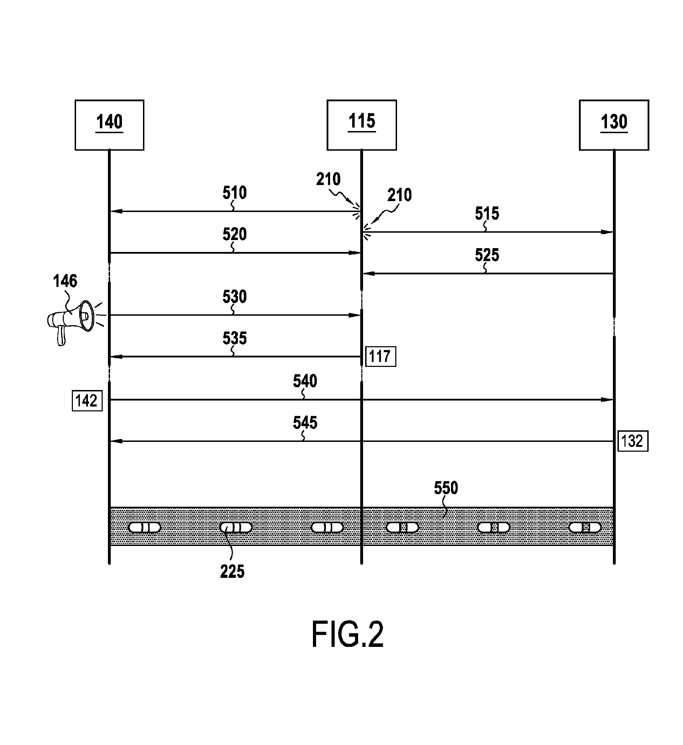

En **figure 2****,** on a représenté les différentes étapes d'un processus de mise en oeuvre de l'invention. La tablette tactile 140 va, dans le scénario décrit, contrôler la caméra 160 (visible en figure 1) par l'intermédiaire du micro-ordinateur 130.

Une phase préliminaire de mise en oeuvre de la fonction de découverte 210 a d'abord lieu. Au cours de cette phase, la passerelle 115 interroge les terminaux du réseau local pour connaître les interfaces matérielles de communication dont ils disposent. Ainsi, elle envoie des requêtes 510 et 515 à la tablette 140 et au micro-ordinateur 130. La tablette 140 émet une réponse 520 à destination de la passerelle indiquant qu'elle dispose d'une interface matérielle IP, et que celle-ci est son unique interface matérielle. Le micro-ordinateur 130 émet une réponse 525 à destination de la passerelle indiquant qu'il dispose d'une interface matérielle IP et d'une interface matérielle Bluetooth, et que ce sont ses uniques interfaces matérielle. La passerelle mémorise ces différentes informations.

Dans une phase ultérieure, un utilisateur de la tablette tactile 140 ou une application exécutée sur la tablette souhaite utiliser ou au moins savoir s'il ou elle peut utiliser un équipement à connectique Bluetooth, comme la caméra 160. La tablette tactile 140 envoie alors une requête 530 à la passerelle pour connaître l'adresse d'un terminal du réseau local disposant d'une interface matérielle Bluetooth. Cela met en oeuvre le programme d'émission de requête 146. La passerelle 115 émet en réponse un message 535 indiquant qu'un terminal du réseau local est équipé d'une interface matérielle Bluetooth, et donne un identifiant de celui-ci, qui peut notamment être son adresse IP. Cela est effectué par exemple par le programme spécifique 117 de la passerelle. Ainsi, la tablette tactile obtient l'adresse d'un terminal du réseau local disposant d'une interface matérielle Bluetooth, qui dans le scénario décrit est le micro-ordinateur 130.

A ce stade, si aucun logiciel applicatif capable de commander la caméra 160 n'est présent dans la tablette tactile 140, un tel logiciel est installé. Cela peut être fait automatiquement ou manuellement. De manière importante, le pilote 142 est installé également sur la tablette 140, s'il ne l'est pas encore. Il peut être téléchargé, par exemple d'un serveur d'un fournisseur d'accès au réseau. Comme expliqué précédemment en relation avec la figure 1, ce logiciel permet l'encapsulation de paquets de données conforme au protocole Bluetooth dans des paquets de données conformes au protocole IP, et inversement l'extraction de paquets de données conforme au protocole Bluetooth dans des paquets de données conformes au protocole IP, ainsi que l'émission et la réception de paquets de données conformes au protocole IP dans un tunnel IP.

Dans une phase ultérieure, qui peut suivre ou non immédiatement la réponse 535, l'utilisateur (ou l'application) a un besoin immédiat d'utiliser la caméra 160. La tablette tactile 140 émet à destination du micro-ordinateur 130 une requête de mise en relation 540. En réaction à la réception de cette requête, le micro-ordinateur 130 émet un message d'acquittement 545 à destination de la tablette tactile 140.

Si le micro-ordinateur 130 ne dispose pas encore du logiciel client 132 lui permettant d'échanger des paquets de données conformes au protocole Bluetooth encapsulés dans des paquets de données conformes au protocole IP, il le télécharge à ce moment, par exemple sur un serveur d'un fournisseur d'accès à Internet.

A la suite de la transmission du message d'acquittement 545, la tablette tactile 140 et le micro-ordinateur 130 mettent en place entre eux le tunnel IP 220 déjà mentionné en relation avec la figure 1. Par ce tunnel transitent, au cours de diverses étapes d'échanges 550, des paquets de données conformes au protocole Bluetooth encapsulés (référence 225) dans des paquets de données conformes au protocole IP.

L'invention ne se limite pas au mode de réalisation présenté, mais s'étend à l'ensemble des réalisations possibles dans le cadre de la portée des revendications.

On remarquera notamment que l'exploitation (référence 144) de l'équipement communiquant par le protocole Bluetooth (respectivement Zigbee ou USB) n'est pas forcément effectuée par le terminal du réseau local sur lequel est installé le pilote 142.

En particulier, si le terminal sur lequel est installé le pilote dispose d'une importante puissance de calcul, il peut effectuer, sans que cela constitue un inconvénient, une traduction vers le protocole IP et transmettre les paquets traduits vers un autre terminal qui, lui, exploite l'équipement. Egalement le terminal disposant du pilote peut aussi établir un tunnel IP avec un troisième terminal et transmettre les paquets de données encapsulés qu'il a reçus à ce troisième terminal, sans avoir procédé à une extraction par lui-même.

Ces deux variantes sont basées sur des traitements des paquets de données conformes au premier protocole de communication, par le dispositif électronique 140, différents du traitement utilisé dans le mode de réalisation principal, à savoir l'extraction des paquets de données conformes au second protocole de communication. Elles rentrent toutes les deux dans le cadre de l'invention. L'invention trouve aussi des applications dans des réseaux locaux qui ne sont pas des réseaux d'habitation, mais par exemple des réseaux d'entreprise ou de lieux publics.

## Revendications

1. Dispositif électronique (140) comprenant des moyens (146) pour, quand il est relié à un réseau local de communication utilisant un premier protocole de communication, **caractérisé en ce que** ledit dispositif électronique comporte
**a.** des moyens pour identifier dans ledit réseau un dispositif passerelle tiers (130 ; 150) indiquant être apte à communiquer selon un deuxième protocole de communication différent du premier protocole, lesdits moyens pour identifier comprennant des moyens (146) pour émettre une requête (530) à destination d'une passerelle d'accès (115) au réseau local, ledit dispositif passerelle étant connectés à au moins un dispositif électronique (140) et un équipement (160, 170, 180) dudit réseau local en utilisant respectivement un premier protocole de communication et un deuxième protocole de communicaiton, **et**
b. des moyens (142) pour établir avec le dispositif passerelle tiers (130 ; 150) un canal de communication (220 ; 221) conforme au premier protocole pour faire transiter des paquets de données conformes audit premier protocole encapsulant (225) des paquets de données conformes au deuxième protocole.

2. Dispositif électronique (140) selon la revendication 1, qui comprend de plus des moyens (144) pour exploiter, en utilisant lesdits paquets de données conformes au deuxième protocole, un équipement communiquant par le deuxième protocole, par exemple une caméra (160), une imprimante (170) ou un équipement de domotique (180).

3. Dispositif électronique (140) selon l'une des revendications 1 à 2, comprenant une tablette tactile, fonctionnant par exemple avec un système d'exploitation Android.

4. Dispositif passerelle (130 ; 150) comprenant des moyens pour être relié à au moins un dispositif électronique (140) d'un réseau local de communication utilisant un premier protocole de communication, une interface matérielle (161 ; 171 ; 181) pour communiquer avec un équipement (160, 170, 180) du réseau local conformément à un deuxième protocole de communication différent du premier protocole, **caractérisé en ce que** le dispositif passerelle comporte :
- des moyens pour indiquer par le réseau local qu'il est apte à communiquer par le deuxième protocole, lesdits moyens pour indiquer comprennant des moyens pour recevoir une requête (530) d'identification d'un dispositif passerellle (130 ; 150) apte à communiquer selon un deuxième protocole de communication différent du premier protocole, et
- des moyens (132) pour établir, avec un dispositif tiers (140) dans le réseau local, un canal de communication (220 ; 221) conforme au premier protocole, et procéder à une extraction, ou respectivement, une encapsulation de paquets de paquets de données conformes au deuxième protocole hors, ou respectivement dans, des paquets de données conformes au premier protocole.

5. Dispositif passerelle selon la revendication 4, dont les moyens pour indiquer qu'il est apte à communiquer par un deuxième protocole sont configurés pour être mis en oeuvre dans le cadre d'un mécanisme de découverte (210).

6. Dispositif passerelle selon la revendication 4 ou la revendication 5, comprenant une centrale domotique (150) ou un micro-ordinateur (130).

7. Dispositif passerelle (130 ; 140 ; 150) selon l'une des revendications 4 à 6, le premier protocole étant le protocole IP, et le canal étant un tunnel IP.

8. Dispositif passerelle (130 ; 140 ; 150) selon l'une des revendications 4 à 7, le deuxième protocole étant un protocole Bluetooth, Zigbee ou USB.

9. Procédé de communication, comprenant une étape au cours de laquelle un dispositif électronique (140), relié à un réseau local de communication utilisant un premier protocole de communication, identifie dans ledit réseau un dispositif tiers (130 ; 150) indiquant être apte à communiquer selon un deuxième protocole différent du premier protocole, **caractérisé en ce que** le procédé comprend de plus une étape d'établissement (540, 545) avec le dispositif tiers (130 ; 150) d'un canal de communication (220 ; 221) conforme au premier protocole pour le transit de paquets de données conformes audit premier protocole encapsulant (225) des paquets de données conformes au deuxième protocole.

10. Procédé de communication, comprenant une étape au cours de laquelle un dispositif électronique (130 ; 150) indique (520 ; 525) sur un réseau local, par un premier protocole de communication, qu'il dispose d'une interface matérielle (161 ; 171 ; 181) pour communiquer conformément à un deuxième protocole de communication différent du premier protocole, **caractérisé en ce que** le procédé comprend de plus des étapes d'établissement (540, 545), avec un dispositif tiers (140) dans le réseau local d'un canal de communication (220 ; 221) conforme au premier protocole, et d'extraction ou, respectivement, d'encapsulation de paquets conformes au deuxième protocole hors ou, respectivement dans des paquets de données conformes au deuxième protocole.

11. Programme d'ordinateur apte à, quand il est exécuté par un dispositif électronique, mettre en oeuvre les étapes d'un procédé selon la revendication 9 ou la revendication 10.

12. Support d'enregistrement sur lequel est stocké un programme d'ordinateur selon la revendication 11.
